# EUROPEAN PATENT APPLICATION

(11) **EP 4 756 193 A1**
(43) Date of publication of application: **10.06.2026**
(21) Application number: 24217757.4
(22) Date of filing: 05.12.2024
(51) Int. Cl.: F01L 3/08, F01L 3/10

(54) **VALVE GUIDE FOR GUIDING A VALVE STEM**

(71) Applicant: Innio Jenbacher GmbH & Co OG, 6200 Jenbach (AT)
(72) Inventor: ZAHNER, Lukas, 83022 Rosenheim (DE); ABGRALL, Yves-Vincent, 6020 Innsbruck (AT)
(74) Representative: Torggler & Hofmann Patentanwälte - Innsbruck

(57) **Abstract**

Valve guide for guiding a valve stem (2) of an internal combustion engine, comprising a first cylindrical guiding surface (3) for guiding a valve stem (2) of an intake valve or an exhaust valve (4) along a guiding axis (5) and a second cylindrical guiding surface (6) for guiding the valve stem (2) of the intake valve or the exhaust valve (4) along the guiding axis (5), wherein
- the first guiding surface (3) and the second guiding surface (6) are distanced axially along the guiding axis (5),
- an annular groove (7) is provided axially between the first guiding surface (3) and the second guiding surface (6) for receiving an O-ring (8) for sealing the valve stem (2),
- a radial shaft seal (9) is provided axially distanced from the annular groove (7) such that the second guiding surface (6) is arranged axially between the annular groove (7) and the radial shaft seal (9).

## Description

The present disclosure concerns a valve guide for guiding a valve stem of an internal combustion engine with the features of the preamble of claim 1.

Inlet valves of internal combustion engines are used to control the supply of fuel, air and/or air-fuel mixture into the main combustion engine. Exhaust valves of internal combustion engine are used to control the outlet of exhaust gases from the main combustion engine after combustion an air-fuel mixture inside the main combustion engine.

Therefore, it is important that inlet and/or exhaust valves are exactly guided to generate on the one hand an effective sealing of the main combustion chamber during combustion stroke and on the other side to provide exact opening and closing times of the valves.

It is known by the state of the art to provide valve guides guiding the intake valve or an exhaust valve by use of cylindrical guiding surface, wherein the guiding surfaces interact with the valve stem of the intake valve or an exhaust valve to guide the valve along a guiding axis.

These guiding surfaces of the valve guide are manufactured with high surface quality to reduce friction and realize high lifetime.

Furthermore, it is known to provide a lubricant for the contact surfaces to increase lifetime, wherein in most cases an engine oil already present in a cavity above the valve guidance is used.

To provide a more exact metering of the lubricant it is known to use e.g. a double lip seal. Examples of valve stem seals are disclosed, for example, in US 5,110,142 and US 4,834,037.

Another way for a metering of the lubricant is to provide an O-rings placed inside the valve guide interacting with the outer surface of the valve stem, as e.g. disclosed by EP 2 540 999 A1.

Analyses of the applicant have shown that these systems are not reliable for a continued metering of oil during life time of the valve guide, as gasses (e.g. exhaust gasses) passing though the gap between valve stem and the guiding surface are blocked by the oil metering system, wherein deposits are build up at the oil metering device provided by the interaction of the hot gases an the lubricant confronted at the oil metering device.

These deposits do mainly affect the lifetime of the valves and the valve guide, as they support the friction between the guiding surfaces and increase the wearing between the guiding surfaces.

Furthermore, the metering device is affected by the deposits, wherein during lifetime more and more lubricant or oil is provided to the contact surface, which surplus of lubricant is passed into the combustion process and does mainly affect the emissions created in the combustion.

The object of the present disclosure is to provide a valve guide and/or an cylinder head comprising a valve guide, wherein at least partially the above identified disadvantages of the state of the art can be improved and/or wherein the metering of lubrication can be improved and/or wherein the wear can be reduced and/or wherein the lifetime can be improved and/or wherein the emissions of the internal combustion engine can be reduced.

This object is achieved with a valve guide for guiding a valve stem of an internal combustion engine having the characteristics of claim 1 and by a cylinder head having the characteristics of claim 8.

A valve guide according to the present disclosure comprises a first cylindrical guiding surface for guiding a valve stem of an intake valve or an exhaust valve along a guiding axis and a second cylindrical guiding surface for guiding the valve stem of the intake valve or the exhaust valve along the guiding axis, wherein
- the first guiding surface and the second guiding surface are distanced axially along the guiding axis,
- an annular groove is provided axially between the first guiding surface and the second guiding surface for receiving an O-ring for sealing the valve stem,
- a radial shaft seal is provided axially distanced from the annular groove such that the second guiding surface is arranged axially between the annular groove and the radial shaft seal.

Analysis carried out by the applicant has shown that the combination of an O-ring as seal and a radial shaft seal - highly surprisingly - results in a significantly longer lifetime of the valve guide disproportionate to the effects of the O-ring and the radial shaft seal on their own.

It is believed that the O-ring interacts with the valve stem such that gases - especially exhaust gasses - passing through are prevented, such that deposits building up at the radial shaft seal are also prevented.

As the build up of deposits in the area of the radial shaft seal are prevented or reduced the operation and function of the radial shaft seal is no longer affected by these deposits.

As a result of that the lifetime of the radial shaft seal is improved as the wear of radial shaft seal affected by deposits is reduced.

Furthermore, as the wear is reduced the oil metering of the radial shaft seal can be obtained more precise for more operating hours, wherein also the lifetime of the valves by a reduction of wear by use of a more efficient lubrication can be increased.

This in turn improves the lifetime of the O-ring. Consequently, the O-ring and the radial shaft seal form a mutually supportive and symbiotic system.

Also, the emissions of the internal combustion engine (which has been increased by oil or lubricant passing into the combustion process by worn seals) can be reduced or kept constant.

The radial shaft seal is also known as a lip seal.

Already present internal combustion engines can be upgraded and operated with a valve guide according to the present disclosure. Therefore, the present disclosure can be used for the embodiments of the prior art already described in the introduction of the description.

The present disclosure can particularly preferably be used in conjunction with an internal combustion engine driving a generator for creating electrical energy. Such combinations of internal combustion engines driving a generator are known as gensets.

The internal combustion engine or genset can preferably be stationary or for naval use.

Advantageous embodiments are defined in the dependent claims.

It can be provided that the valve guide comprises a base body having a mounting surface for mounting the valve guide, preferably by use of a press-fit, at a cylinder head of the internal combustion engine.

The base body of the valve guide can be cylindrical.

The radial shaft seal can be provided at a radial step of the base body, preferably at the upper end, particular preferred wherein the upper end of the base body is at least partially covered by the radial shaft seal.

A lip of the radial shaft seal - preferably of the lip seal - can be provided by an elastic material, preferably PTFE (Polytetrafluorethylene).

It can be provided that the radial shaft seal comprises a first lip, preferably a dust lip, and a second lip, preferably a sealing lip, wherein the first lip and the second lip of the radial shaft seal are distanced along the guiding axis.

It can be provided that the second lip, preferably the sealing lip, is pre-loaded by use of a garter spring also known as tube spring. Formulated differently the pre-load can be realized by a body of roughly cylindrical topology with radial spring action.

The O-ring can be provided by an elastic material, preferably fluoropolymer rubber.

Furthermore, protection is sought for a cylinder head for an internal combustion engine comprising a valve guide according to the present disclosure, wherein the valve guide is arranged, preferably by use of a press-fit, at least partially inside a corresponding opening of the cylinder head, wherein an intake valve or exhaust valve is guided along the guiding axis at the guiding surface of the valve guide.

It can be provided that the radial shaft seal is placed in the valve guide in such a way to prevent a passing of lubricant disposed in the valve guide to an outside of the valve guide.

It can be provided that the intake valve or exhaust valve is pre-loaded with respect to a valve seat by use of at least one spring element.

Also, protection is sought for an internal combustion engine comprising a valve guide or a cylinder head according to the present disclosure.

Further details and advantages of the present disclosure are apparent from the accompanying figures and the following description of the drawings. The figures show:
- Fig. 1: a first embodiment of an exhaust valve mounted inside a cylinder head of an internal combustion engine,
- Fig. 2: the detail view A indicated in Fig. 1,
- Fig. 3: the radial shaft seal of Fig. 1 and 2 in detail, and
- Fig. 4: the detail view B indicated in Fig. 1.

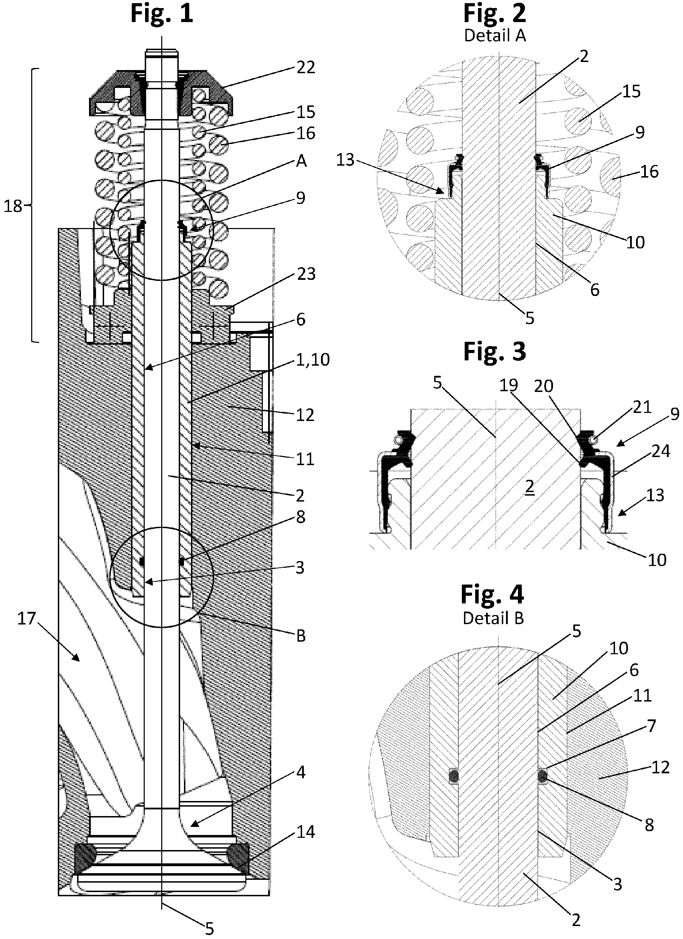

Fig. 1 shows a first embodiment of an exhaust valve 4 mounted inside the cylinder head 12.

To show each detail of this embodiment Fig. 2 presents detail A and Fig. 4 detail B both indicated in Fig. 1.

Fig. 3 presents the radial shaft seal 9 used in the embodiment of Fig. 1 in an increased manner to indicate each component of this radial shaft seal 9.

The exhaust valve 4 used to control an exiting of exhaust gas from a combustion chamber of the internal combustion engine into the exhaust port 17 is placed axially guided along the guiding axis 5 in the cylinder head 12.

Therefore, the exhaust valve 4 is placed with the valve stem 2 inside the valve guide 1, wherein the valve stem 2 of the exhaust valve 4 is guided by the guiding surfaces 3, 6 of the valve guide 1 along the guiding axis 5.

The exhaust valve 4 is pre-loaded with respect to a valve seat 14 by use of the spring elements 15, 16.

The spring elements 15, 16 are combined to a spring package 18 by use of a upper and lower spring plate 22 ,23.

The lower spring plate 23 is screwed with the cylinder head 12 and the upper spring plate 22 is axially joined to the valve stem 2, preferably by use of a snap ring.

The valve guide 1 is arranged with its cylindrical base body 5 by use of a press-fit inside a corresponding opening of the cylinder head 12, wherein the exhaust valve 4 is guided along the guiding axis 5 at the guiding surface 3, 6 of the valve guide 1.

The valve guide 1 comprises a first guiding surface 3 and a second guiding surface 6 distanced axially along the guiding axis 5.

Axially between the first guiding surface 3 and the second guiding surface 6 an annular groove 7 is provided for receiving an O-ring 8 for sealing the valve stem 2.

Furthermore, a radial shaft seal 9 is provided axially distanced from the annular groove 7 such that the second guiding surface 6 is arranged axially between the annular groove 7 and the radial shaft seal 9.

The base body 10 of the valve guide 1 comprises a mounting surface 11 for mounting the valve guide 1 by use of a press-fit at a cylinder head 12.

The radial shaft seal 9 is provided at a radial step 13 of the base body 10 at the upper end, wherein the upper end of the base body 10 is partially covered by the radial shaft seal 9.

This radial shaft seal 9 is provided by an elastic material, wherein in the region of the metal ring 24 of the radial shaft seal 9 the elastic material is deformed and pressed against the radial step 13 of the base body 10 for attaching and saving the radial shaft seal 9 at the base body.

The radial shaft seal 9 comprises a first lip, namely the dust lip 19, and a second lip, namely a sealing lip 20, wherein the dust lip 19 and the sealing lip 20 are distanced along the guiding axis 5.

The sealing lip 20 pre-loaded with respect to the valve stem 2 by use of the garter spring 21.

### List of used reference signs:

- 1: valve guide
- 2: valve stem
- 3: first cylindrical guiding surface
- 4: exhaust valve
- 5: guiding axis
- 6: second cylindrical guiding surface
- 7: annular groove
- 8: O-ring
- 9: radial shaft seal
- 10: base body
- 11: mounting surface
- 12: cylinder head
- 13: radial step of the base body
- 14: valve seat
- 15: spring element
- 16: spring element
- 17: exhaust port
- 18: spring package
- 19: dust lip
- 20: sealing lip
- 21: garter ring
- 22: upper spring plate
- 23: lower spring plate
- 24: metal ring

## Claims

1. Valve guide for guiding a valve stem (2) of an internal combustion engine, comprising a first cylindrical guiding surface (3) for guiding a valve stem (2) of an intake valve or an exhaust valve (4) along a guiding axis (5) and a second cylindrical guiding surface (6) for guiding the valve stem (2) of the intake valve or the exhaust valve (4) along the guiding axis (5), wherein
- the first guiding surface (3) and the second guiding surface (6) are distanced axially along the guiding axis (5),
- an annular groove (7) is provided axially between the first guiding surface (3) and the second guiding surface (6) for receiving an O-ring (8) for sealing the valve stem (2),
- a radial shaft seal (9) is provided axially distanced from the annular groove (7) such that the second guiding surface (6) is arranged axially between the annular groove (7) and the radial shaft seal (9).

2. Valve guide according to claim 1, wherein the valve guide (1) comprises a base body (10) having a mounting surface (11) for mounting the valve guide (1), preferably by use of a press-fit, at a cylinder head (12) of the internal combustion engine.

3. Valve guide according to claim 2, wherein the base body (10) of the valve guide (1) is provided cylindrical.

4. Valve guide according to claim 2 or 3, wherein the radial shaft seal (9) is provided at a radial step (13) of the base body (10), preferably at the upper end, particular preferred wherein the upper end of the base body (10) is at least partially covered by the radial shaft seal (9).

5. Valve guide according to at least one of the preceding claims, wherein a lip, especially a dust lip (19), of the radial shaft seal (9) is provided by an elastic material, preferably PTFE.

6. Valve guide according to at least one of the preceding claims, wherein the radial shaft seal (9) comprises a first lip, preferably a dust lip (19), and a second lip, preferably a sealing lip (20), wherein the first lip and the second lip of the radial shaft seal (9) are distanced along the guiding axis (5).

7. Valve guide according to at least one of the preceding claims, wherein the O-ring (8) is provided by an elastic material, preferably fluoropolymer rubber.

8. Cylinder head for an internal combustion engine comprising a valve guide (1) according to at least one of the preceding claims, wherein the valve guide (1) is arranged, preferably by use of a press-fit, at least partially inside a corresponding opening of the cylinder head (12), wherein an intake valve or exhaust valve (4) is guided along the guiding axis (5) at the guiding surface (3, 6) of the valve guide (1).

9. Cylinder head according to the preceding claim, wherein the radial shaft seal (9) is placed in the valve guide (1) in such a way to prevent a passing of lubricant disposed in the valve guide (1) to an outside of the valve guide (1).

10. Cylinder head according to claim 7 or 8, wherein the intake valve or exhaust valve (4) is pre-loaded with respect to a valve seat (14) by use of at least one spring element (15, 16).

11. Internal combustion engine comprising a valve guide (1) according to at least one of the claims 1 to 6 or a cylinder head (12) according to at least one of the claims 7 to 9.
